Europäisches Patentamt

European Patent Office

Office européen des brevets

(11) Veröffentlichungsnummer: **0 292 829 B1**

# EUROPÄISCHE PATENTSCHRIFT

(45) Veröffentlichungstag der Patentschrift: **09.12.92**

(21) Anmeldenummer: **88107819.0**

(22) Anmeldetag: **16.05.88**

(51) Int. Cl.⁵: **B60T 15/04**

---

(54) **Zweikreis-Bremsventil, insbesondere Fussbremsventil für Bremsanlagen von Fahrzeugen.**

---

(30) Priorität: **26.05.87 DE 3717783**

(43) Veröffentlichungstag der Anmeldung:
**30.11.88 Patentblatt 88/48**

(45) Bekanntmachung des Hinweises auf die
Patenterteilung:
**09.12.92 Patentblatt 92/50**

(84) Benannte Vertragsstaaten:
**AT CH DE ES FR GB IT LI NL SE**

(56) Entgegenhaltungen:
**EP-A- 0 151 988**
**DE-B- 2 716 495**

(73) Patentinhaber: **KNORR-BREMSE AG**
**Moosacher Strasse 80 Postfach 401060**
**W-8000 München 40(DE)**

(72) Erfinder: **Eiband, Karl**
**Angerstrasse 3**
**W-8939 Buchloe(DE)**
Erfinder: **Vollmer, Otto**
**Joergstrasse 50**
**W-8000 München 21(DE)**

Rank Xerox (UK) Business Services

## Beschreibung

Die Erfindung betrifft ein Zweikreis-Bremsventil nach dem Gattungsbegriff des Patentanspruches 1.

Ein diesem Gattungsbegriff entsprechendes Zweikreis-Fußbremsventil ist aus der EP-A 0 151 988 bekannt. Bei diesem Fußbremsventil ist nur der Kolben des zweiten Kreises mit einem einen Ventilsitz für die Ventileinrichtung dieses Kreises tragenden Hilfskolben ausgestattet, wobei zwischen dem erwähnten Kolben und dem Hilfskolben die in ihrer Vorspannung einstellbare Feder eingespannt ist. Dieses Fußbremsventil weist somit eine nur für einen, nämlich den zweiten Kreis wirksame Druckbegrenzung auf. Der Fortsatz des ersten Kolbens endet mit einem Ventilsitz, der zusammen mit einer Ventilhülse das Auslaßventil des ersten Kreises bildet. Diese Ventilhülse ist in Bewegungsrichtung nach unten nach Überwinden eines Leerhubes auf den zweiten Kolben aufsetzbar und vermag diesen zum mechanischen Schließen des Auslaßventils und nachfolgendem Öffnen des Einalßventils des zweiten Kreises, also zur mechanischen Durchsteuerung, bei ihrem weiteren Abwärtshub mitzunehmen. Die Kraftübertragung beim mechanischen Durchsteuern erfolgt also durch das Auslaßventil des ersten Kreises, was ungünstig ist.

Aus der DE-B 27 16 495 ist ein weiteres Zweikreis-Fußbremsventil bekannt, welches eine nur für den ersten Kreis wirksame Druckbegrenzung aufweist, die jedoch sehr ähnlich zu der vorstehend beschriebenen Druckbegrenzung für den zweiten Kreis ausgebildet ist, also einen im ersten Kolben geführten Hilfskolben und eine diesen belastende, justierbare Feder aufweist. Zur mechanischen Durchsteuerung ist der Hilfskolben mit einem justierbaren Anschlag versehen, der an den zweiten Kolben anlegbar ist, und es ist ein weiterer Anschlag zwischen dem ersten Kolben bzw. dem Druckstück und dem Hilfskolben erforderlich, der dem Hilfskolben im Normalbetrieb jedoch seine für die Druckbegrenzung erforderliche Beweglichkeit belassen muß; zur mechanischen Durchsteuerung sind daher relativ große Hubwege erforderlich.

Zweikreis-Bremsventile, insbesondere als Fußbremsventile für Bremsanlagen von Nutzfahrzeugen, steuern den Betriebsdruck für den Hinterachsbremskreis und den Vorderachsbremskreis des Fahrzeugs. Bei sogenannten Mischdruck-Bremsanlagen kann als Vorratsdruck des ersten Kreises ein Normaldruck von z.B. 8 bar vorgesehen sein, während für den Vorratsdruck des zweiten Kreises ein Hochdruck von z.B. 16 bar vorgesehen sein kann. Es ist jedoch auch möglich, beide Kreise mit einem Hochdruck von z.B. 16 bar zu fahren. Hierbei kann es erwünscht sein, eine Druckbegrenzung für beide Kreise zu erreichen, die folgenden Punkten entspricht:

Wenn ein Kreis ausfällt, muß im anderen Kreis der eingestellte Druck erreichbar sein. Das Versagen einer der Druckbegrenzungseinrichtungen darf keinen Einfluß auf die Druckhöhe des zweiten Kreises nehmen; hierbei muß in dem defekten Kreis eine merkbare Veränderung des erzielten Druckwertes im Vergleich zum begrenzten Druckwert feststellbar sein. Die mechanische Durchsteuerung des zweiten Kreises, also z.B. des Vorderachsbremskreises muß bei Ausfall des ersten Kreises sichergestellt sein. Schließlich soll auch die Druckbegrenzung am ersten als auch vom zweiten Kreis unabhängig vom jeweils anstehenden Vorratsdruck sein.

Zur Lösung dieser Aufgabe dienen die Merkmale nach dem Kennzeichnungsteil des Patentanspruches 1.

Durch die Zuordnung von Druckbegrenzungseinrichtungen für die Ventilsysteme des ersten und des zweiten Kreises ist sichergestellt, daß bei mechanischer Betätigung jeweils nur ein vorherbestimmbarer Druck ausgesteuert wird. Es ist also auch der erste Kreis mit den druckbegrenzenden Mitteln versehen, falls ein mechanisches Durchsteuern der Bremsventilkolbenanordnung bis auf Anschlag vorgenommen werden sollte. Ein Durchsteuern von Hochdruck ist hierdurch absolut sicher ausgeschaltet; entsprechend ist eine Beaufschlagung der Relaiskolbenanordnung des zweiten Kreises mit dem Hochdruck verhinderbar. Die Druckbegrenzungseinrichtungen arbeiten unabhängig voneinander, d.h., wenn einer der Kreise ausfällt, ist im jeweils anderen Kreis der eingestellte Druck erreichbar. Auch ist ein Ausfall einer der Druckbegrenzungseinrichtugnen, d.h. der Bruch einer Druckfeder, ohne Auswirkung auf die Funktion der Druckbegrenzungseinrichtung des jeweils anderen Kreises. Selbst bei teilweisem oder vollkommenem Ausfall des ersten Kreises ist eine Betätigung, also die Funktion des zweiten Kreises sichergestellt, da zwischen den Ventilmitteln des ersten und zweiten Kreises eine mechanische Durchsteuerung vorgesehen ist. Diese mechanische Durchsteuerung stellt einen Sicherheitsfaktor dar, da in jedem Fall z.B. die Bremszylinder des Vorderachsbremskreises betätigbar bleiben, auch wenn die Druckversorgung des Hinterachsbremskreises ausfallen sollte.

Vorteilhafte Ausgestaltungen und Weiterbildungen sind in den Unteransprüchen aufgeführt.

Die Erfindung ist nachfolgend anhand eines Ausführungsbeispiels unter Bezugnahme auf die beigefügte Zeichnung erläutert. Die Zeichnung gibt in Längsschnittansicht ein Zweikreis-Bremsventil nach der Erfindung wieder.

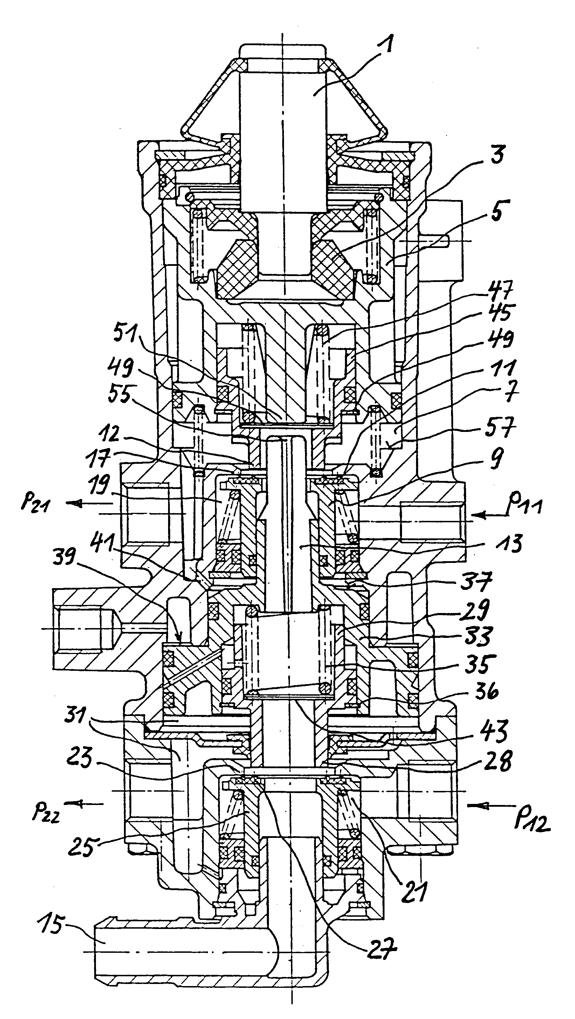

In Fig.1 der Zeichnung ist eine Ausführungsform nach der Erfindung als Fußbremsventil mit lastabhängiger Regelung dargestellt, bei welchem ein (nicht dargestelltes) Bremspedal auf ein Druckstück 1 einwirkt; das Druckstück 1 stützt sich über eine Feder 3 an einem Kolben 5 ab, so daß der Kolben 5 bei Betätigung des Bresmpedals gemäß Darstellung nach unten verschoben wird. Der Kolben 5 begrenzt eine Kammer 7 und wirkt gegenüber einem am oberen Ende einer Ventilhülse 9 angeordneten, ringförmigen Ventilelement 11. Das Ventilelement 11 bildet zusammen mit einem Ventilsitz 12 des Kolbens 5 ein Auslaßventil, welches in geöffneter Position die Kammer 7 mit einem im Inneren der Ventilhülse 9 vorgesehenen Entlüftungskanal 13 verbindet. Der Entlüftungskanal 13 durchsetzt das gesamte Fußbremsventil und mündet in einem an der Unterseite vorgesehenen Auslaß 15. Das Ventilelement 11 wirkt außerdem in dargestellter Weise gegenüber einem gehäusefesten Ventilsitz 17, mit welchem es ein Einlaßventil bildet; zwischen dem Ventilsitz 17 und der Ventilhülse 9 ist eine Einlaßkammer 19 vorgesehen, in welche ein mit dem z.B. Hochdruck führenden Druckluftvorrat des ersten Kreises verbundener Anschluß p 11 mündet. Die Einlaßkammer 19 steht bei geschlossenem Auslaßventil und bei geöffnetem Einlaßventil mit der Kammer 7, der Bremsluftkammer des ersten Kreises, in Verbindung, so daß die Druckluft aus der Einlaßkammer 19 über die Kammer 7, einen Anschluß p 21 und z.B. einen (nicht dargestellten) lastabhängig arbeitenden Bremskraftregler in die Bremszylinder der Hinterachse des Fahrzeuges gelangt, um diese zu betätigen.

Beim Ventilmechanismus des zweiten Bremskreises, des Vorderachsbremskreises, ist eine Einlaßkammer 21 vorgesehen, welche über einen Anschluß p 12 an einen Hochdruckvorrat angeschlossen ist. Die Einlaßkammer 21 ist durch einen gehäusefesten Ventilsitz 23 und durch eine Ventilhülse 25 begrenzt.

Die Ventilhülse 25 trägt ein Ventilelement 27, welches mit einem Ventilsitz 28 eines Hilfskolbens 29 ein Auslaßventil bildet. Das Auslaßventil ist geöffnet dargestellt, in dieser Lage verbindet das Auslaßventil eine Kammer 31, die Bremsluftkammer der Vorderachse, zum Zwecke der Entlüftung mit dem Entlüftungskanal und dem Auslaß 15. Die Kammer 31 steht über einen Anschluß p 22 mit den Bremszylindern des zweiten Kreises, d.h. mit den Bremszylindern der Vorderachse in Verbindung. Die Kammer wird durch die in der Einlaßkammer 21 anstehende Druckluft des zweiten Kreises belüftet, wenn der Ventilsitz 28 des Hilfskolbens 29 nach unten geschoben wird und gegenüber dem Ventilelement 27 dichtet, so daß der Auslaß geschlossen ist, und wenn gleichzeitig das Ventilelement 27 vom Ventilsitz 23 gelöst, also gemäß Darstellung nach unten gerichtet verschoben wird.

Der Hilfskolben 29 ist innerhalb eines Kolbens 33 geführt, wobei zwischen dem Kolben 33 und dem Hilfskolben 29 eine vorgespannte Feder 35 vorgesehen ist. Die Vorspannung wird dadurch erreicht, daß der Hilfskolben an seinem unteren Ende gemäß Darstellung durch einen Sicherungsring 36 am Kolben 33 gehalten ist. Der Kolben 33 besitzt z.B. an seiner Oberseite zwei durch Dichtungen voneinander getrennte Ringflächen, nämlich eine innere Ringfläche 37 und eine äußere Ringfläche 39. Die innere Ringfläche 37 ist mittels des dargestellten Kanals 41 durch den am Anschluß p 21 herrschenden Druck beaufschlagbar, während die äußere Ringfläche 39 durch den ausgesteuerten Druck eines lastabhängig wirkenden Bremskraftreglers an sich bekannter Wirkungsweise beaufschlagbar ist. Wenn die beiden Ringflächen des Kolbens 33 durch den Druck des Anschlußes p 21 bzw. den lastabhängigen Druck des Bremskraftreglers (nicht dargestellt) beaufschlagt werden, dann verschiebt sich der Koblen zusammen mit dem Hilfskolben 29 nach unten gerichtet und schließt in genannter Weise das Auslaßventil und öffnet das Einlaßventil. Die Druckluft vom Anschluß p 12, welche in der Einlaßkammer 21 vorherrscht, strömt bei geöffnetem Einlaß in die Kammer 31 und beaufschlagt den Kolben 33 bzw. den Hilfskolben 29 auf ihrer Unterseite. Befindet sich der Bremskraftregler in Vollaststellung, bei welcher der Bremskraftregler einen Druck 1:1 aussteuert, dann stellt sich am Anschluß p 22 unabhängig von der Höhe des Vorratsdruckes am Anschluß p 12 der gleiche Druck ein wie am Anschluß p 21, wenn die beaufschlagten Flächen auf der Ober- und Unterseite des Kolbenpaares, bestehend aus Kolben 33 und Hilfskolben 29, gleich groß sind. Die Kraft der vorgespannten Feder 35 ist so bemessen, daß sich der Hilfskolben 29 unter der Einwirkung des am Anschluß p 22 in der Kammer 31 wirkenden normalen Druckes nicht relativ zum Kolben 33 verschiebt.

Wenn die nachfolgend beschriebene Druckbegrenzung am Ein- und Auslaßventil des 1. Kreises einen Hochdruck auf z.B. 8 bar reduziert, dann besteht dieser Druck auch am Anschluß p 21. Folglich wirkt der Druck des Anschlußes p 21 an der inneren Ringfläche 37. Bei Vollast des Bremskraftreglers wirkt ein gleicher Druck auf der äußeren Ringfläche 39 des Kolbens 33, da der Bremskraftregler über eine (nicht dargestellte) Verbindung mit dem äußeren Ringraum oberhalb des Kolbens 33 in Verbindung steht.

Herrscht am Anschluß p 12 ein Hochdruck von z.B. 16 bar, dann besteht in der Bremsenabschlußstellung am Anschluß p 22 gleichwohl nur ein Druck von 8 bar, wenn, wie vorstehend erwähnt, die beaufschlagten Flächen der Ober- und Unterseite des Kolbenpaares gleich groß sind und Einlaß- und Auslaßventil bei einem ausgesteuerten Druck von 8 bar in Bremsabschlußstellung sind. Das Kolbenpaar wirkt also in bekannter Weise in Form eines Relaiskolbens.

Es ist auch möglich, die vorgespannte Feder 35 so auszulegen, daß der maximal ausgesteuerte Druck am Anschluß p 22 kleiner oder größer ist als der maximale Druck am Anschluß p 21 des ersten Kreises.

Zur Veränderung der Spannung der Feder 35 stützt sich diese mittels einer oder mehrerer Scheiben 43 am Hilfskolben 29 ab. Anstelle der Scheiben 29 kann auch eine gegenüber dem Hilfskolben 29 im Inneren desselben verschraubbare Mutter vorgesehen sein, welche als Auflage für die Feder 35 dient. In diesem Fall wird die Spannung der Feder 35 durch Verschraubung der Mutter veränder ich gestaltet.

Eine der vorstehend beschriebenen Druckbegrenzung vergleichbare Einrichtung ist auch dem Kolben 5 des ersten Kreises zugeordnet. Demgemäß sind innerhalb des Kolbens 5 ein Hilfskolben 45 und eine vorgespannte Feder 47 vorgesehen. Auch die Feder 47 besitzt vorzugsweise eine Abstützung verändericher Höhe, so in Form von Scheiben 49, um das Ausmaß der Druckbegrenzung des ersten Kreises veränderlich gestalten zu können.

Ein im Inneren des Kolbens 5 axial nach unten sich erstreckender, von der Feder 47 umgebener Fortsatz 51 kann zum Zwecke mechanischer Durchsteuerung mit einem Stößel 55 zusammenwirken, der sich im Inneren des Entlüftungskanals 13 vom Kolben 33 nach oben gerichtet erstreckt.

Mit Hilfe der vorbeschriebenen Ventilkonstruktion ist es möglich, den eingangs genannten Forderungen gerecht zu werden:

Wird bei Ausfall des Druckes im 1. Kreis das Druckstück 1 und über dieses der Kolben 5 mechanisch betätigt, dann steht dem Kolben 5 der Weg bis zum Anschlag 57 am Gehäuse zur Verfügung. Innerhalb dieses Betätigungsweges legt sich der Fortsatz 51 auf die Oberseite des Stößels 55 auf, wodurch mechanisch durchgesteuert wird. Der mit dem Stößel 55 verbundene Kolben 33 wird somit nach unten gedrückt und wirkt in an sich bekannter Weise gegenüber der Ventilhülse 25. Das Auslaßventil wird geschlossen und das Einlaßventil wird geöffnet, wobei der am Anschluß p 12 anstehende Druck mittels des Hilfskolbens 29 reduziert wird und als reduzierter Druck am Anschluß p 22 zur Verfügung steht. Am zweiten Kreis existiert der reduzierte Druck des Anschlusses p 22, während der erste Kreis infolge des vorliegend zugrundegelegten Druckluftausfalles drucklos ist.

Bei intaktem Druckluftvorrat des ersten und des zweiten Kreises kann es jedoch auch vorkommen, daß z.B. die Feder 47 des ersten Kreises bricht. Auch in diesem Fall bleibt die Ventilbetätigung des zweiten Kreises unbeeinflußt, d.h. mittels des Fortsatzes 51 und des Stößels 55 erfolgt die mechanische Durchsteuerung. Der Bruch der Feder 47 im Ventil des ersten Kreises beeinträchtigt also die Funktion des intakten zweiten Kreises nicht, im defekten Kreis wird im allgemeinen der Bruch der Feder durch einen geringeren Druckwert auffallen, da selbst bei gebrochener Feder eine geringe restliche Betätigung des Einlaß- und Auslaßventils des ersten Kreises erfolgen kann. In jedem Fall führt der Bruch einer Bruchfeder, sei es im ersten Kreis oder sei es im zweiten Kreis, zu einer merkbaren Veränderung gegenüber dem begrenzten Druckwert.

Fällt der Vorratsdruck des zweiten Kreises aus, so bleibt dies ohne Einfluß auf die Funktion des ersten Kreises, d.h. bei Betätigung des Fußbremsventils wird am Anschluß p 12 der begrenzte Druck entsprechend der Vorspannung der Feder 47 ausgesteuert, während am Anschluß p 22 kein ausgesteuerter Druck vorliegt. Bricht im zweiten Kreis, d.h. Hilfskolben 29, die Feder 47, so bleibt auch dies ohne Einfluß auf die Funktion des ersten Kreises. Es stellt sich lediglich ein geringerer Druckwert des defekten Kreises, d.h. des zweiten Kreises ein.

Auch bei Extremfällen der Fehlfunktion, wenn also z.B. im ersten Kreis der Vorratsdruck ausfällt und gleichzeitig die Feder 47 bricht, ist die Funktion des zweiten Kreises unbeeinflußt sichergestellt. Auch in diesem Fall erfolgt die mechanische Durchsteuerung vom ersten auf den zweiten Kreis. Entsprechendes gilt für einen totalen Ausfall des zweiten Kreises; hiervon bleibt die Ventilbetätigung des ersten Kreises unbeeinflußt, es ist also immer sichergestellt, daß an einem der Kreise ein ausgesteuerter Druck erzielbar ist.

Die Druckbegrenzung des ersten und des zweiten Kreises ist bei der Ventilkonstruktion nach der vorliegenden Erfindung in vorteilhafter Weise unabhängig vom Vorratsdruck, dies wird dadurch erreicht, daß die Ventilkörper, d.h. die Ventilhülsen 9 und 25 druckentlastet sind. Der ausgesteuerte Druck des Anschlusses p 12 bzw. des Anschlusses p 22 wirkt hierbei an der Unterseite der Ventilkörper, so daß in bekannter Weise an den Ventilkörpern ein Druckausgleich erreicht ist.

Bezugszeichenliste

| | |
|---|---|
| 1 | Druckstück |
| 3 | Feder |
| 5 | Kolben |
| 7 | Kammer |
| 9 | Ventilhülse |
| 11 | Ventilelement |
| 12 | Ventilsitz |
| 13 | Entlüftungskanal |
| 15 | Auslaß |
| 17 | Ventilsitz |

| 19 | Einlaßkammer |
|----|--------------|
| 21 | Einlaßkammer |
| 23 | Ventilsitz |
| 25 | Ventilhülse |
| 27 | Ventilelement |
| 28 | Ventilsitz |
| 29 | Hilfskolben |
| 31 | Kammer |
| 33 | Kolben |
| 35 | Feder |
| 36 | Sicherungsring |
| 37 | Ringfläche |
| 39 | Ringfläche |
| 41 | Kanal |
| 43 | Scheibe |
| 45 | Hilfskolben |
| 47 | Feder |
| 49 | Scheibe |
| 51 | Fortsatz |
| 55 | Stößel |
| 57 | Anschlag |
| p 11 | Anschluß |
| p 21 | Anschluß |
| p 12 | Anschluß |
| p 22 | Anschluß |

## Patentansprüche

1. Zweikreis-Bremsventil, insbesondere Fußbremsventil für Bremsanlagen von Fahrzeugen, mit einem durch ein Druckstück (1) betätigbaren, den Druck in einer ersten, vorzugsweise mit den Bremszylindern der Hinterachse verbundenen Kammer (7) steuernden, ersten Kolben (5) und einem in Betätigungsrichtung vom Druck der ersten Kammer (7) beaufschlagbaren zweiten Kolben (33), welcher den Druck in einer zweiten, vorzugsweise mit den Bremszylindern der Vorderachse verbundenen Kammer (31) steuert, wobei zur mechanischen Betätigung der Ventileinrichtung (Ventilsitz 23, Ventilelement 27, Ventilsitz 28) des zweiten Kreises eine mechanische Durchsteuerung vorgesehen ist, welcher ein vom ersten Kolben (5) abwärts in Richtung zum zweiten Kolben (33) ragender Fortsatz (51) zugehört, und wobei einem Kreis eine Druckbegrenzungseinrichtung zugeordnet ist, welche einen im diesem Kreis zugehörenden Kolben (33) abgedichtet verschieblich geführten Hilfskolben (29) mit einem an diesem ausgebildeten Ventilsitz (28) und eine zwischen diesem Kolben (33) und dem Hilfskolben (29) eingespannte Feder (35) aufweist, deren Vorspannung einstellbar ist, dadurch gekennzeichnet, daß beiden Kreisen des Bremsventils je eine an sich bekannte Druckbegrenzungseinrichtung zugeordnet ist, wobei jede der beiden Druckbegrenzungseinrichtungen je einen im Kolben (5 bzw. 33) des jeweiligen Kreises verschiebbar angeordneten, unter der Wirkung einer in ihrer Vorspannung gesondert einstellbaren Feder (47,35) stehenden Hilfskolben (45,29) aufweist, welcher mit einem an ihm ausgebildeten Ventilsitz (12,28) gegenüber der Auslaß- und Einlaßventilanordnung (11,12 bzw. 27,28 und 11,17 bzw. 27,23) des ersten bzw. zweiten Kreises wirkt, derart, daß der am ersten und zweiten Kreis anstehende Druck (Hochdruck) auf einen ausgesteuerten Normaldruck reduzierbar ist, und daß zur mechanischen Durchsteuerung zwischen dem ersten und dem zweiten Kreis ein vom Kolben (33) des zweiten Kreises axial in Richtung zum ersten Kreis sich erstreckender Stößel (55) vorgesehen ist, welcher bei Druckausfall im ersten Kreis durch Anlegen an den Fortsatz (51) von diesem mechanisch betätigbar ist.

2. Zweikreis-Bremsventil nach Anspruch 1, dadurch gekennzeichnet, daß der Fortsatz (51) sich axial innerhalb des Hilfskolbens (45) erstreckt.

## Claims

1. Dual-circuit brake valve, particularly foot-brake valve for brake systems of vehicles, provided with a first piston (5), capable of being actuated by a thrust member (1) and controlling the pressure in a first chamber (7), which is preferably connected with the brake actuator of the rear axle, and a second piston (33), capable of being pressurized in actuating direction by the pressure of the first chamber (7), said piston (33) controlling the pressure in a second chamber (31), which is preferably connected with the brake actuators of the front axle, a mechanical force transmission means being provided for the mechanical actuation of the valve means (valve seat 23, valve element 27, valve seat 28) of the second circuit, said force transmission means including a projection (51), extending from the first piston (5) downwards in the direction of the second piston (33), one circuit comprising a pressure limiting means, which is provided with an auxiliary piston (29), which is movably sealed inside a piston (33), associated to said circuit, said auxiliary piston (29) featuring a valve seat (28) and a spring (35), mounted between said piston (33) and the auxiliary piston (29), the pretension of said spring (35) being adjustable, **wherein** both circuits of the brake valve include one pressure limiting means each, known in the abstract, both of which incorporate one auxiliary piston each (45, 29) which is movably arranged in the piston (5, 33) of the respective circuit, under the action of a spring (47, 35), the pretension of which can be specially adjusted, said auxiliary piston (45, 29) with its valve seat (12, 28) acting such with respect to the outlet and inlet valve means (11, 12 or 27, 28 and 11, 17 or 27, 23) that the pressure (high pressure) applied to the first and second circuits can be reduced to an output operating pressure, a rod member (55) extending in axial direction from the piston (33) of the second circuit toward the first circuit for the mechanical force transmission between the first and the second circuit, said rod member (55) being capable of being actuated mechanically by getting into contact with the projection (51) in case of a failure of pressure in the first circuit.

2. Dual-circuit brake valve according to Claim 1, wherein the projection (51) extends axially within the auxiliary piston (45).

**Revendications**

1. Soupape de frein à deux circuits, en particulier soupape de frein de service ou de frein à pied pour des installations de freinage de véhicules, avec un premier piston (6) qui est susceptible d'être actionné par une pièce de pression et qui contrôle la pression dans une première chambre (7) de préférence reliée avec les cyclindres de frein de l'essieu arrière, et avec un second piston (33) qui est susceptible d'être chargé, dans la direction de manoeuvre, par la pression qui règne dans la première chambre (31), et qui contrôle la pression qui règne dans une seconde chambre (31) qui est reliée de préférence avec les cylindres de frein de l'essieu avant, la réalisation étant telle que pour la manoeuvre mécanique du dispositif de soupape (siège de soupape 23, élement de soupape 27, siège de soupape 28) du second circuit, il est prévu un dispositif mécanique de commande dont fait partie un appendice (51) qui s'étend vers le bas à partir du premier piston (51) en direction du second piston (33), qu'à un circuit est associé un dispositif de limitation de la pression, qui comporte un piston auxiliaire (29) guidé avec étanchéité dans le piston (33) appartenant à ce circuit, ainsi qu'un ressort (35) monté entre ce piston (33) et le piston auxiliaire (29) et dont la prétention est réglable, caractérisée par le fait qu'à chacun des deux circuits de la soupape de frein est respectivement associé un dispositif de limitation de la pression, chacun de ces deux dispositifs de limitation de la pression comportant un piston auxiliaire (45, 29) susceptible d'être déplacé dans le piston (5, 33) du circuit correspondant et soumis à l'action d'un ressort (47, 35) dont la précontrainte est réglable séparément, lequel piston auxiliaire agit, par l'intermédiaire d'un siège de soupape (12, 28) qui est ménagé sur lui-même et par rapport à l'agencement de soupape d'évacuation et l'agencement de soupape d'admission (11, 12 - 27, 28 et 11, 17 - 27, 23) de telle manière que la pression (pression élevée) qui est présente dans le premier et dans le second circuit est susceptible d'être réduite au niveau d'une pression normale qui est établie, et que, pour assurer la commande mécanique entre le premier circuit et le second circuit, il est prévu un poussoir (55) qui s'étend du piston (33) du second circuit axialement en direction du premier circuit, ledit poussoir (55) étant susceptible, dans le cas d'une défaillance dans le premier circuit, d'être commandé mécaniquement par son application contre l'appendice (51).

2. Soupape de frein à deux circuits selon la revendication 1, caractérisée par le fait que l'appendice (51) s'étend axialement dans le piston auxiliaire (45).